# EUROPEAN PATENT SPECIFICATION

(11) **EP 1 027 176 B1**
(45) Date of publication and mention of the grant of the patent: **02.05.2003**
(21) Application number: 98903018.4
(22) Date of filing: 21.01.1998
(51) Int. Cl.: B09B 3/00

(54) **TREATMENT OF WASTE HAVING A SOLID MATRIX CONTAINING VAPORIZABLE SUBSTANCES**
BEHANDLUNG VON ABFALL, DER AUS EINER FESTEN MATRIX BESTEHT, DIE VERDAMPFBARE SUBSTANZEN ENTHÄLT
TRAITEMENT DE DECHETS COMPORTANT UNE MATRICE SOLIDE ET DES SUBSTANCES POUVANT ETRE VAPORISEES

(30) Priority: 24.01.1997 IT TO970048
(43) Date of publication of application: 16.08.2000
(73) Proprietor: SICIM SpA, I-34076 Romans d'Isonzo (GO) (IT)
(72) Inventor: MORGANTINI, Gianpiero, I-10126 Torino (IT); PELLEGRIN, Roberto, I-10128 Torino (IT); BAR, Umberto, I-10131 Torino (IT)
(74) Representative: Rambelli, Paolo
(86) International application number: EP9800302
(87) International publication number: WO98032548

(56) References cited:
- EP-A- 0 487 750
- US-A- 3 897 011
- US-A- 4 869 810
- US-A- 5 110 055

## Description

The present invention relates to a method for treating waste having a predominantly solid matrix which also contains vaporizable substances.

In particular, the invention provides a method which can extract vaporizable substances from the mass of waste, at the same time producing therefrom a substantially sterile solid waste material permitting safe, easy and economical handling, storage, transportation and disposal operations.

The vaporizable substances to which the invention relates are substances which are in the liquid state at ambient temperature and, in general, all substances which have sufficient vapour pressure to emit odours at ambient temperature.

The problems with waste containing such substances vary according to the particular waste, to the form in which it is present (sediment, sludge, paste and the like), to the type and quantity of liquids contained (which may be up to or more than 80%), to the dimensions of the elements making up the waste itself, and to the specific characteristics of the material to be treated, for example, the heterogeneity of the components and their adhesiveness.

In general, the problems are due to the emanation of odours, to difficulties in storing the waste inclosed tanks, to mechanical handling difficulties, to risks of the dispersal of dangerous substances or agents into the atmosphere, to limited storage time and to the possibility of the initiation of fermentation.

Examples of solid waste normally containing liquids are: residues resulting from medical uses and medical scientific research, sludges coming from paint-spray booths, discharges in paste form resulting from the production of polymers, adhesives, paints and mastics, and sediments from industrial processes and from purification plants.

The liquids present in the solid wastes may be of many types, for example alcohols, aldehydes, esters, phenols and solvents in general, naturally as well as water. Their presence in the waste, which is also often due to spontaneous fermentation which starts rapidly owing to the presence of environmental micro-organisms, is often the cause of bad odours.

In many cases, the presence of even a small amount of toxic or harmful liquid is sufficient to cause the waste as a whole to fall within the classification of dangerous waste. In such a situation, the elimination of the liquid may permit declassification of the risk connected with the waste, consequently reducing environmental impact and disposal costs.

It is difficult to eliminate these volatile substances completely by means of the normal evaporation or stripping operations carried out by external heating of the system since there is often a predominance in the waste of materials which, at the high temperatures to which the walls have to be brought in order to achieve an acceptable exchange of heat, cause fusion and deposits, resulting in heat-transmission difficulties, decomposition and clogging. In particular, the heterogeneity of the materials to be treated and their indeterminate chemical and physical nature makes it difficult to select suitable generalised treatment conditions on the basis of the normal systems mentioned above.

US-A-4 869 810 describes a method of the type defined in the pre-characterising part of appended claim 1, for separating oil, water and other evaporable liquids from drilling mud, bleaching earth, sludge from oil tanks and oil shale.

US-A-5 110 055 describes an apparatus and method for use in cleaning comminuted thermoplastics material for reuse in manufacture of moulded plastic products. Batches of plastic including adherent label materials and adhesives are agitated by a rotor until frictionally heated to a predetermined temperature and a flow of air is used to carry away loosened labels and adhesives. A small amount of water is introduced as a spray to dissolve adhesives and soften remaining label materials.

US-A-3 897 011 describes a method and apparatus for converting thermoplastic waste material into a commercial-grade natural material, wherein the waste is introduced into a chamber containing a rotating cutter which shreds and frictionally heats the thermoplastic material, which is thereafter cooled by cooling water.

The method of treating waste having a predominantly solid matrix containing vaporisable substances according to the invention is defined in the appended claims.

The apparatus for implementing the method comprises:
- a cell for holding the waste,
- a rotor disposed inside the cell and having radial blades shaped in a manner such that the rotation of the rotor inside the cell gives rise to compression of the mass of waste being treated towards the base of the cell,
- drive means for rotating the rotor,
- means for injecting a vaporizable fluid onto the mass of waste inside the cell,
- a control and operating unit arranged to control the peripheral velocity of the rotor and the quantity of fluid injected in a manner such as to maintain a temperature of between 120 and 170°C inside the cell, and
- means for evacuating from the cell an evaporation flow of the vaporizable fluid together with the vaporized substances contained in the waste to be treated.

In particular, the method of the invention can advantageously treat the waste achieving:
a) extraction of the vaporizable substances from the solid which becomes dry, smooth-flowing and deodorized,
b) elimination of micro-organisms, seeds, fungi, spores, etc., from the separately-obtained liquid and solid fractions so that the materials are biologically sanitized and can therefore be handled safely.

In the preferred embodiment the method is implemented under a slight vacuum, for example, of about -20mm water column relative to atmospheric pressure, and takes place as follows.

A suitable bladed rotor which has a shape and profile designed to operate in combination with the base of a cylindrical cell with a vertical axis subjects the waste disposed therein to compression and internal friction so as to generate a considerable amount of heat within the waste and thus to achieve, within a short time, a high regulable working temperature within the range between 120 and 170°C, preferably with a typical value of about 150°C. Preferably, no heat is supplied indirectly through the walls of the cell or directly by means of fluids.

The temperature is then kept constant by control of the peripheral velocity of the rotor and by the automatic injection of an extraction fluid which has a boiling point below the working temperature and which, as it is transformed into vapour, absorbs energy so that a balance is automatically achieved between the heat generated and that absorbed.

All of the vaporizable substances contained in the waste can thus be extracted as vapour and are sent,together with the vapours of the extraction fluid, to a condensation system.

The extraction fluid to be used in the method must have a boiling point below the working temperature; naturally, for reasons of low cost and ease of use, water is the extraction fluid typically used.

When the substances to be extracted have a fairly low vapour pressure (and nonetheless are often very malodorous, as is the case with certain substances with high molecular weights which are formed as a result of the action of environmental micro-organisms), other extraction fluids which have a vapour pressure even greater than that of water at the working temperature (that is, in practice, which have lower boiling points than water), for example, carbon tetrachloride, heptane, or cyclohexane, may advantageously be used instead of water so that the extraction effect is enhanced and the time required for the extraction is reduced.

The extraction fluids must in any case have the characteristic of having a boiling point below the working temperature at which the waste is kept. In the case of solvents, those which are insoluble in water are preferred so as to be easily separated.

When the extraction fluid comes into contact with the mass of waste which is at a temperature higher than the boiling point of the extraction fluid, it is immediately vaporized together with the vaporizable substances present in the waste, which are thus removed in the flow of vapour produced for subsequent condensation.

Automatic adjustment of the peripheral velocity of the rotor blades and of the metering of the extraction fluid achieves an energy balance permitting maintenance of a constant temperature for a predetermined period of time (typically 5-15 minutes) and hence complete control of the progress of the process and perfect reproducibility thereof.

Non-condensable aeriforms which are discharged from the system by means of a final aspirator are treated in a unit comprising in series: a column for washing with water to which an oxidizing substance which can reduce odours (typically hydrogen peroxide) has been added, the column being filled with packing bodies (typically Raschig rings or the like), a coalescence demister, a pre-filter and a dust filter, an activated-carbon filter, an absolute filter, and an aspirator.

Upon completion of the extraction stage, it is preferable to implement a stage of short duration (typically about 1 minute) during which water is injected to eliminate residual quantities of the extraction fluid remaining in the material, causing the material to be cooled to a temperature of about 105°C.

The method and apparatus have the following preferred characteristics:
a) the entire apparatus is kept under a constant slight vacuum (about -20mm water column) by a centrifugal aspirator situated at the output of the apparatus, downstream of suitable filtration systems, so as to ensure, by means of the vacuum, that leakages of vapours and/or aerosols cannot take place from the various sealing members present in the machine;
b) the heat-production system is located inside the cell and is formed by the base of the cell in combination with a bladed rotor positioned a small distance, typically between 50 and 100 millimetres, from the base;
c) the rotor blades preferably have "attacking profiles", that is, front edges (in the direction of rotation) which strike the mass of waste, which are formed by surfaces inclined at between 30 and 45 degrees to the plane of the base, that is, to a plane perpendicular to the axis of rotation so that, during the rotary movement, the waste is compresse against the base and there is therefore a large amount of friction and strong heating;
d) the rotor is driven by a motor which imparts to the blades a peripheral velocity which is preferably variable within the range between 20 and 70 m/second so that the quantity of heat produced can be regulated on the basis of that required at every individual stage of the working cycle;
e) without further heat supply, the mass of waste is heated rapidly to the temperature programmed which, typically, is set at about 150°C;
f) once the mass has reached the temperature programmed this is kept constant for a predetermined time (typically 5-15 minutes) by the injection of controlled quantities of an extraction fluid which evaporates instantaneously, absorbing thermal energy;
g) the vaporizable substances present in the waste are vaporized simultaneously with the vaporization of the extraction fluid and are thus extracted;
h) the temperature of the material is determined in real time by means of suitable sensors;
i) the vapours produced are removed from the cell and condensed;
j) upon completion of the extraction, water is injected and, by evaporating, eliminates residual quantities of the extraction fluid and at the same time cools the mass to about 105°C;
k) the dry solid phase is then discharged by centrifugal force by the automatic opening of a valve disposed in the base of the cell;
l) the discharge valve is then kept open for a certain time (typically one minute) in order to flush the cell with air so as to eliminate residual vapours.

Further characteristics and advantages of the method according to the invention will become clear from the following detailed description given with reference to the appended drawings, provided purely by way of non-limiting example, in which:

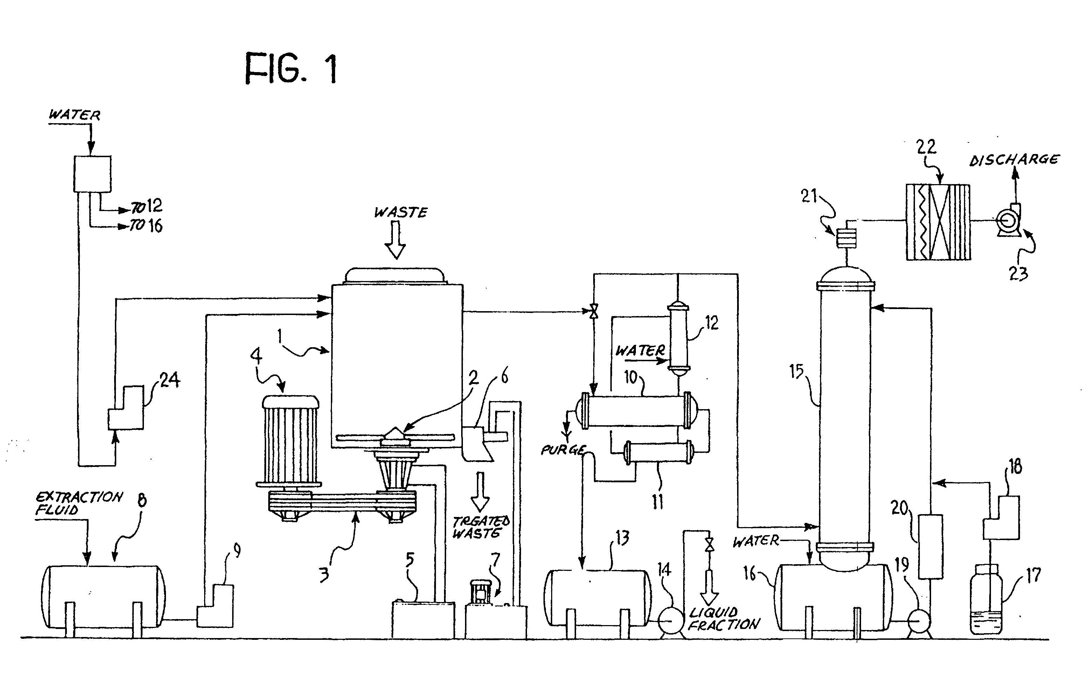

Figure 1 is a diagram illustrating the process,

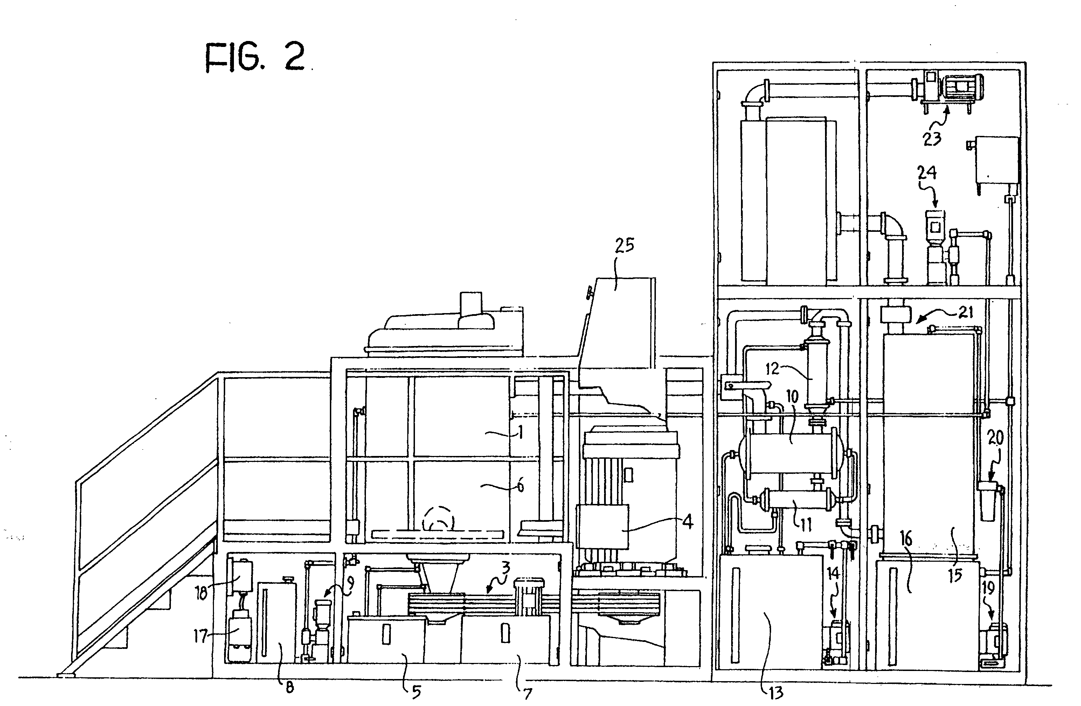

Figure 2 is a perspective view or apparatus,

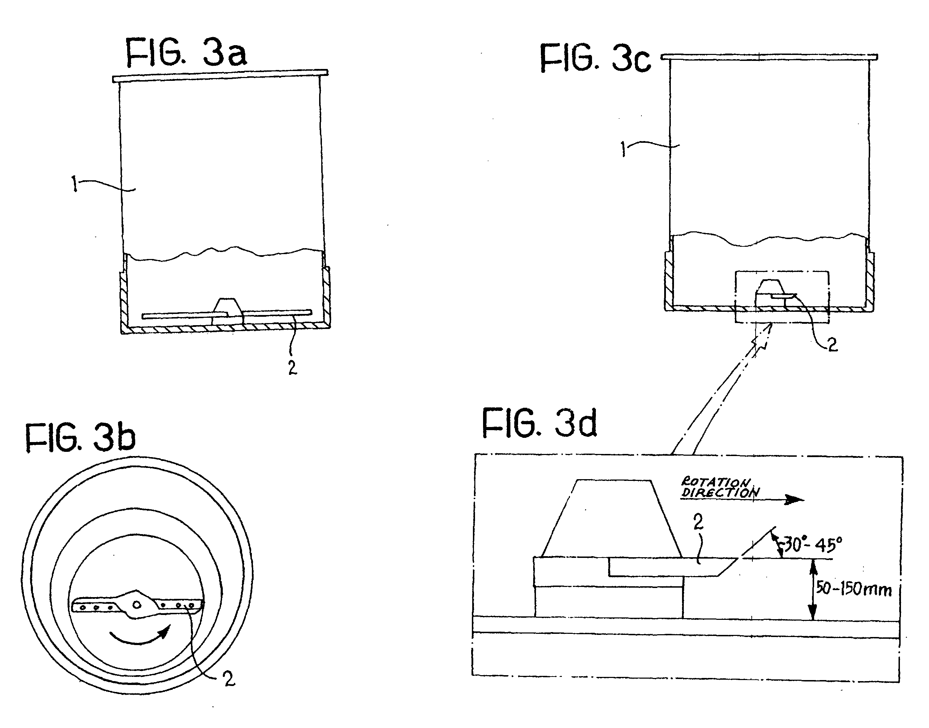

Figure 3a is a view of a cell with its rotor, shown in section,
Figure 3b is a plan view of the cell of Figure 3a,
Figure 3c is a side view of the cell of Figure 3a,
Figure 3d is an enlarged detail of Figure 3c.

The cell, generally indicated 1, is constituted by a housing with a cylindrical wall having a vertical axis and a diameter typically between 0.35m and 2m, formed internally of wear-resistant steel, typically manganese steel. The cell is closed by a cover and seals. A rotor 2 with a vertical axis and with blades extending radially is mounted at a distance of about 50-150 mm from the base of the cell. The blades of the rotor, of which there are typically two, have the characteristic that their front edges, with reference to the direction of rotation, that is, their so-called "attacking profiles" are formed by surfaces which are inclined, preferably at between 30 and 45 degrees, to the plane of the base, that is, to a plane perpendicular to the axis of rotation. The rotor is connected by means of a bearing and a transmission formed by belts and pulleys 3 to a motor 4 the speed of which is variable continuously or in steps, and which has a power of from 5 to 350 kW. The rotor bearing is flushed with oil circulated by a device 5 in order to lubricate and cool the rotating shaft.

The cell has a discharge valve 6 controlled by an oleodynamic device 7. The temperature inside the cell is measured and monitored continuously and in real time by a detector sensitive to the infra-red component and installed in the lid of the cell, or by a sensor fitted in the vicinity of the base of the cell.

The cell is connected by tubing to a tank 8 from which an extraction fluid is injected into the cell by means of a pump 9 in accordance with a temperature program controlled by a programmable logic computer (PLC) and by a temperature regulator.

The vapours which are formed in the cell are conveyed to a condenser 10 and the liquid phase is then cooled in an exchanger 11 whilst the condensable substances still present are stopped in an exchanger 12.

The liquid fraction is collected in a small tank 13. A pump 14 enables the fluid to be homogenized for sampling and analysis and subsequent re-use or transfer for treatment or disposal. The gases separated are then sent to a column 15 for washing and absorption with water to which an oxidizing substance, for example, hydrogen peroxide or sodium hypochlorite has been added, so as to damp the vapours and the odours. The column is of the type filled with Raschig rings or the like, with a collection tank 16. The oxidizing substance is drawn from a container 17 and metered by a metering pump 18. The condenser 10 can be by-passed by means of a valve and vapours can be sent directly to the washing and absorption column 15. The pump 19 which recycles the washing solution to the top of the column 15 causes the solution to pass through a filter 20.

The non-condensable gases which emerge from the column are dehumidified in a coalescence demister 21 and then pass into a filtering unit 22 comprising a pre-filter, a dust filter, an activated-carbon filter, and an absolute filter and, finally, are expelled by means of an aspirator 23 which keeps the whole apparatus constantly under a slight vacuum.

The residues of the extraction fluid used are eliminated upon completion of the process by the metering of water into the cell by means of a pump 24 until the temperature of the mass falls to 105°C. An electrical panel 25 with a PLC and control panel complete the apparatus.

In the preferred embodiment, the rotor blades are also provided with cutting edges for chopping and breaking up the waste to be treated if it contains solids which can be chopped. It is intended that, the principle of the invention remaining the same, the details of embodiment and methods of construction may be varied widely with respect to those described and illustrated by way of non-limiting example.

## Claims

1. A method of treating waste with a predominantly solid matrix containing vaporizable substances, in comprising the steps of:
- heating the mass of waste in a restricted environment (1) to a temperature of from 120 to 170°C by the generation of heat by internal mechanical friction,
- extracting most of the vaporizable substances from the mass of heated waste in connection with the evaporation of a fluid so as to generate a stripping flow which is evacuated from the treatment environment, **characterized in that** :
the said fluid is metered to the waste and
the quantity of fluid metered and the heat generated by mechanical friction being regulated in a manner such as to keep the temperature within the range of values defined above during the extraction stage.

2. A method according to Claim 1, **characterized in that** a subatmospheric pressure is maintained in the restricted environment.

3. A method according to Claim 1 or Claim 2, **characterized in that** the heating and extraction operations are performed in the absence of an indirect heat supply.

4. A method according to any one of the preceding claims, in which the fluid which can evaporate and which is injected onto the waste is selected from water and hydrocarbon solvents having boiling points below that of water.

5. A method according to Claim 4, in which the fluid is selected from carbon tetrachloride, heptane and cyclohexane.

6. A method according to any one of the preceding claims, further comprising, after the extraction step, the step of injecting onto the waste treated a quantity of washing water such as to cleanse the solid waste of the residual quantities of fluid used for the extraction and for cooling the mass treated.

7. A method according to any one of the preceding claims in which the gaseous extraction flow evacuated from the restricted treatment environment is subjected to cooling and condensation to produce a biologically sanitized liquid phase.

8. A method according to any one of the preceding claims **characterized in that** it is carried out in an apparatus comprising a cell (1) for holding the waste, a rotor (2) disposed inside the cell and having blades shaped in a manner such as to give rise to compression of the waste towards the base of the cell, drive means (3, 4) for rotating the rotor, means (9) for injecting a vaporizable fluid onto the mass of waste inside the cell, a control and operating unit (25) arranged to control the peripheral velocity of the rotor (2) and the quantity of fluid injected in a manner such as to maintain a temperature within the range from 120 to 170°C inside the cell, and means for evacuating from the cell a gaseous flow containing the vaporized fluid and the vaporizable substances included in the waste treated.

9. A method according to Claim 8, wherein said apparatus further comprises means for maintaining a subatmospheric pressure inside the cell.

10. A method according to Claim 8 or Claim 9, **characterized in that** the rotor has radial blades having attacking surfaces inclined at an angle of between 30 and 45 degrees to the plane of the base of the container or to a plane perpendicular to the axis of rotation.

11. A method according to any one of Claims 8 to 10, **characterized in that** said apparatus comprises means for treating the gaseous flow and the vapours evacuated from the cell to bring about condensation of the vapours, washing and deodorizing of the gases in a column with a flow of water to which an oxidizing substance has been added, and filtration of the gases before their expulsion.

## Patentansprüche

1. Verfahren zum Bearbeiten von Abfallstoffen mit einer vorwiegend festen Grundmasse, die verdampfbare Substanzen enthält, wobei das Verfahren folgende Schritte enthält:
- Erhitzen der Masse von Abfallstoffen in einer abgegrenzten Umgebung (1) auf eine Temperatur von 120 bis 170°C durch das Erzeugen von Wärme durch interne mechanische Reibung,
- Extrahieren eines Großteils der verdampfbaren Substanzen aus der Masse von erhitzten Abfallstoffen im Zusammenhang mit der Verdampfung eines Fluids, um eine strippende Strömung zu erzeugen, die von der Bearbeitungsumgebung abgeleitet wird, **dadurch gekennzeichnet, dass**:
das Fluid den Abfallstoffen zugemessen wird, wobei die Menge des zugemessenen Fluids und die durch die mechanische Reibung erzeugte Wärme geregelt werden, um die Temperatur während des Extraktionsschritts innerhalb des Bereichs der oben festgelegten Werte zu halten.

2. Verfahren gemäß Anspruch 1, **dadurch gekennzeichnet, dass** in der abgegrenzten Umgebung ein unteratmosphärischer Druck aufrecht erhalten wird.

3. Verfahren gemäß Anspruch 1 oder Anspruch 2, **dadurch gekennzeichnet, dass** der Erhitzungs- und Extraktionsvorgang ohne indirekte Wärmezufuhr ausgeführt werden.

4. Verfahren gemäß irgendeinem der bisherigen Ansprüche, wobei das Fluid, das verdampfen kann und auf die Abfallstoffe gespritzt wird, aus Wasser und Kohlenwasserstofflösungsmitteln ausgewählt wird, deren Siedepunkte unter dem Siedepunkt von Wasser liegen.

5. Verfahren gemäß Anspruch 4, wobei das Fluid aus Tetrachlorkohlenstoff, Heptan und Cyclohexan ausgewählt wird.

6. Verfahren gemäß irgendeinem der bisherigen Ansprüche, wobei das Verfahren weiters. nach dem Extraktionsschritt einen Schritt enthält, bei dem auf die bearbeiteten Abfallstoffe eine Menge Waschwasser gespritzt wird, um die festen Abfallstoffe von den Restmengen jenes Fluids zu reinigen, das für die Extraktion und zum Kühlen der bearbeiteten Masse verwendet wurde.

7. Verfahren gemäß irgendeinem der bisherigen Ansprüche, wobei die gasförmige Extraktionsströmung, die von der abgegrenzten Bearbeitungsumgebung abgeleitet wird, einer Abkühlung und einer Kondensation unterzogen wird, um eine biologisch gereinigte flüssige Phase zu erzeugen.

8. Verfahren gemäß irgendeinem der bisherigen Ansprüche, **dadurch gekennzeichnet, dass** das Verfahren in einer Vorrichtung ausgeführt wird, die einen Behälter (1), um die Abfallstoffe aufzunehmen, einen Rotor (2), der innerhalb des Behälters angeordnet ist und Flügel besitzt, die so ausgebildet sind, um die Abfallstoffe gegen die Basis des Behälters zu drücken, einen Antrieb (3, 4), um den Rotor in Drehung zu versetzen, eine Einrichtung (9), um ein verdampfbares Fluid auf die Masse von Abfallstoffen innerhalb des Behälters zu spritzen, eine Steuer- und Betätigungseinheit (25), die so aufgebaut ist, um die Umfangsgeschwindigkeit des Rotors (2) sowie die Menge des eingespritzten Fluids zu steuern, um innerhalb des Behälters eine Temperatur im Bereich von 120 bis 170°C aufrecht zu erhalten, sowie eine Einrichtung enthält, um aus dem Behälter eine gasförmige Strömung abzuleiten, die das verdampfte Fluid sowie die verdampfbaren Substanzen enthält, die in den bearbeiteten Abfallstoffen enthalten sind.

9. Verfahren gemäß Anspruch 8, wobei die Vorrichtung weiters eine Einrichtung enthält, um innerhalb des Behälters einen unteratmosphärischen Druck aufrecht zu erhalten.

10. Verfahren gemäß Anspruch 8 oder Anspruch 9, **dadurch gekennzeichnet, dass** der Rotor radiale Flügel besitzt, die über Angriffsflächen verfügen, die zur Basisebene des Behälters oder zu einer Ebene senkrecht zur Drehachse unter einem Winkel zwischen 30 und 45° geneigt sind.

11. Verfahren gemäß irgendeinem der Ansprüche 8 bis 10, **dadurch gekennzeichnet, dass** die Vorrichtung eine Einrichtung enthält, um die gasförmige Strömung sowie die vom Behälter abgeleiteten Dämpfe zu bearbeiten, um eine Kondensation der Dämpfe, ein Waschen und eine Desodorierung der Gase in einer Säule mit einer Wasserströmung, der eine oxidierende Substanz beigegeben wurde, sowie eine Filtrierung der Gase vor deren Ausstoßung hervorzurufen.

## Revendications

1. Procédé de traitement de déchets avec une matrice essentiellement solide contenant des substances pouvant être vaporisées, comprenant les étapes suivantes :
- chauffage de la masse de déchets dans un environnement restreint (1) à une température variant entre 120 et 170°C par génération de chaleur produite par une friction mécanique interne,
- extraction de la plupart des substances pouvant être vaporisées hors de la masse de déchets chauffés en rapport avec l'évaporation d'un fluide, de façon à générer un flux d'élimination qui est évacué de l'environnement de traitement,
**caractérisé en ce que** :
ledit fluide est dosé par rapport aux déchets et la quantité de fluide dosée ainsi que la chaleur produite par la friction mécanique sont réglées de façon à maintenir la température dans la fourchette de valeurs définie ci-dessus pendant l'étape d'extraction.

2. Procédé selon la revendication 1, **caractérisé en ce qu'** une pression subatmosphérique est maintenue dans l'environnement restreint.

3. Procédé selon la revendication 1 ou 2, **caractérisé en ce que** les opérations de chauffage et d'extraction sont réalisées en l'absence de toute alimentation indirecte de chaleur.

4. Procédé selon l'une quelconque des revendications précédentes, dans lequel le fluide pouvant s'évaporer et étant injecté sur les déchets est sélectionné parmi l'eau et des solvants d'hydrocarbures dont les points d'ébullition sont inférieurs à celui de l'eau.

5. Procédé selon la revendication 4, dans lequel le fluide est sélectionné parmi du tétrachlorure de carbone, de l'heptane et du cyclohexane.

6. Procédé selon l'une quelconque des revendications précédentes, comprenant en outre, après l'étape d'extraction, une étape d'injection d'une quantité d'eau de lavage sur les déchets traités de façon à débarrasser les déchets solides des quantités résiduelles de fluide utilisées pour l'extraction et pour le refroidissement de la masse traitée.

7. Procédé selon l'une quelconque des revendications précédentes, dans lequel le flux d'extraction gazeux évacué de l'environnement restreint de traitement est soumis à un refroidissement et à une condensation afin de produire une phase liquide biologiquement aseptisée.

8. Procédé selon l'une quelconque des revendications précédentes, **caractérisé en ce qu'**il est réalisé dans un appareil comprenant une cellule (1) permettant de retenir les déchets, un rotor (2) placé à l'intérieur de la cellule et doté de pales dont la forme est conçue pour comprimer les déchets vers le fond de la cellule, des moyens d'entraînement (3, 4) permettant de tourner le rotor, un moyen (9) permettant d'injecter un fluide pouvant être vaporisé sur la masse de déchets à l'intérieur de la cellule, une unité de commande et de fonctionnement (25) conçue pour commander la vélocité périphérique du rotor (2) et la quantité de fluide injectée de façon à maintenir une température à l'intérieur de la cellule variant entre 120 et 170°C, et un moyen permettant d'évacuer de la cellule un flux gazeux contenant le fluide vaporisé ainsi que les substances présentes dans les déchets traités et pouvant être vaporisées.

9. Procédé selon la revendication 8, dans lequel ledit appareil comprend en outre un moyen pour maintenir une pression subatmosphérique à l'intérieur de la cellule.

10. Procédé selon la revendication 8 ou 9, **caractérisé en ce que** le rotor présente des pales radiales dotées de surfaces d'attaque inclinée selon un angle variant entre 30 et 45 degrés par rapport au plan du fond de la cellule ou à un plan perpendiculaire à l'axe de rotation.

11. Procédé selon l'une quelconque des revendications 8 à 10, **caractérisé en ce que** ledit appareil comprend des moyens permettant de traiter le flux gazeux et les vapeurs évacuées de la cellule pour provoquer une condensation des vapeurs, de laver et de désodoriser les gaz dans une colonne à l'aide d'un flux d'eau auquel une substance oxydante a été ajoutée, ainsi que de filtrer les gaz avant leur expulsion.
